# EUROPEAN PATENT APPLICATION

(11) **EP 4 822 924 A1**
(43) Date of publication of application: **14.10.2026**
(21) Application number: 26170320.1
(22) Date of filing: 01.04.2026
(51) Int. Cl.: H02G 3/14, H02G 3/18

(54) **ELECTRIC APPARATUS**

(30) Priority: 11.04.2025 IT 202500008043
(71) Applicant: GEWISS S.p.A., 24069 Cenate Sotto (Bergamo) (IT)
(72) Inventor: BOSATELLI, FABIO, 24069 CENATE SOTTO (BERGAMO) (IT)
(74) Representative: Forattini, Amelia

(57) **Abstract**

An electric apparatus, particularly for fastening an electrical module to a support bracket, has at least one module to be associated to a support by means of at least one coupler device; the coupler device comprises two independent hook systems, respectively an outer hook system and an inner hook system; the outer hook system is configured to define a pre-coupling position of the module with respect to said support, wherein the module can be easily wired; after the wiring is completed, the inner hook system finally fastens the module to the support in an operational position. The system facilitates and accelerates wiring operations.

## Description

The present invention relates to an electrical apparatus, particularly to a coupler system of an electrical module to a support bracket.

Electrical boxes for home or office use are configured to support electrical modules such as switches, sockets, and pushbuttons, fastened to a support associated with a flush mounting box.

Each module is associated to the support by means of a coupler system normally consisting of elastic teeth that allow to snap on the module to the support from the inside, after connecting the electrical conductors to the same module, and before fastening the support to the box.

A conventional electric apparatus is assembled by associating the modules to the support and then wiring the modules while holding the support.

Once the wiring is done, the support can be fastened to the flush mounting box.

The wiring operation is therefore uncomfortable because the support must somehow be held while the electrical conductors are inserted into and fixed to each module.

EP0744805A1 discloses a tamper-proof system for electrical apparatus snap-engaged in a housing in a support plate for fixing to a wall, by insertion of the apparatus in the housing from the front, comprising first engagement means formed in a pair of opposite walls of the plate which define the housing and accessible only when the support is removed from the wall, and a pair of locking fingers having second engagement means which mate with the first, to contact the pair of fingers to the pair of walls, and thereby prevent the resilient tongues provided with snap-engageable teeth from yielding and thereby retaining the devices.

EP0989648A1 discloses a system for securing electrical apparatuses in a supporting frame having a window with opposite walls for snap assembly of the apparatuses. The apparatuses or the opposite walls of the frame have tongues that engage respective seats formed in the walls of the frame or in the apparatuses. The tongues slide in the seats until they reach the end stop, in order to avoid unfastening of the frame. The seats can be opened in the front or rear part of each wall to allow insertion of the apparatuses from the front or the rear of the frame, respectively.

US2023/097409A1 discloses a wire distributor-combined tumbler switch device including a bracket assembly which is fixed to a switch housing bracket installed on a wall surface of a building, a switching-wire distributor module which is coupled to the bracket assembly is electrically connected to an electric wire of an electric device, regulates power on/off, and is configured to distribute electric wires of a distributing board, and a detachable coupling means configured to detachably couple the switching-wire distributor module to the bracket assembly.

WO2022/219556A1 discloses flush-to-wall electrical box comprising: a box-like body, perimeter fixing walls, a perimeter edge, a first frame, and a front closing profile that can be removably fixed to the frame. The front closing profile is equipped with a plurality of safety teeth and the first frame is equipped with a plurality of lateral flaps and with a plurality of thrust flaps.

The aim of the present invention is to provide an electric apparatus improved over the cited prior art devices.

Within the scope of this object, a particular aim of the invention is to provide an electric apparatus wherein the operation of wiring and mounting of the modules is faster and simplified.

An important object of the invention is to provide a wiring system which enables faster installation.

A further object of the invention is to provide a system which, due to its special design features, is able to ensure the broadest guarantees of reliability and safety in use.

These objects and others which will better appear hereafter, are achieved by an electric apparatus as claimed in the appended claims.

Further characteristics and advantages will become better apparent from the description of preferred, but not exclusive, embodiments of the invention, illustrated by way of and nonlimiting example in the accompanying drawings, wherein:
Figure 1 is a perspective view of an electric apparatus according to the invention illustrated in the phase of pre-hooking the module to the support;
Figure 2 is a perspective view illustrating the final coupled position of the module to the support;

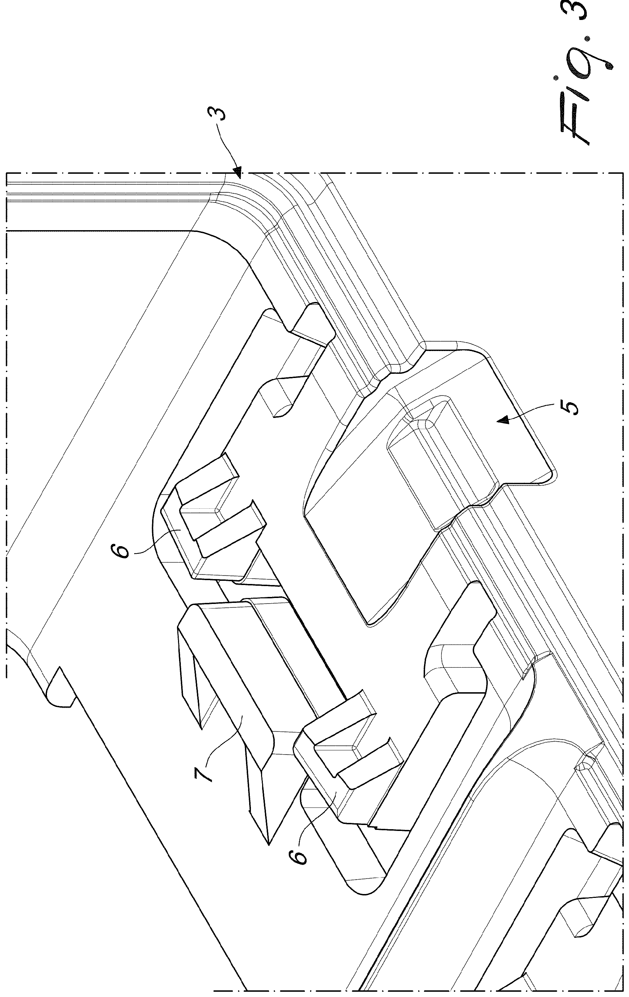

Figure 3 is an enlarged perspective view illustrating in detail the two lower coupler apparatuses;

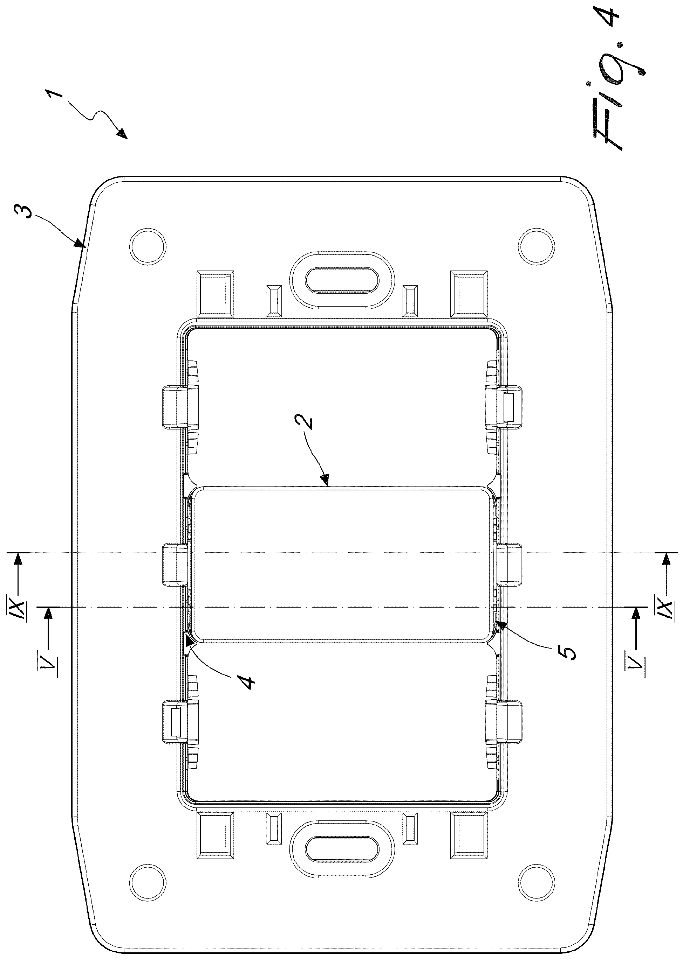

Figure 4 is a front view of the electric apparatus support of figures 1 and 2;

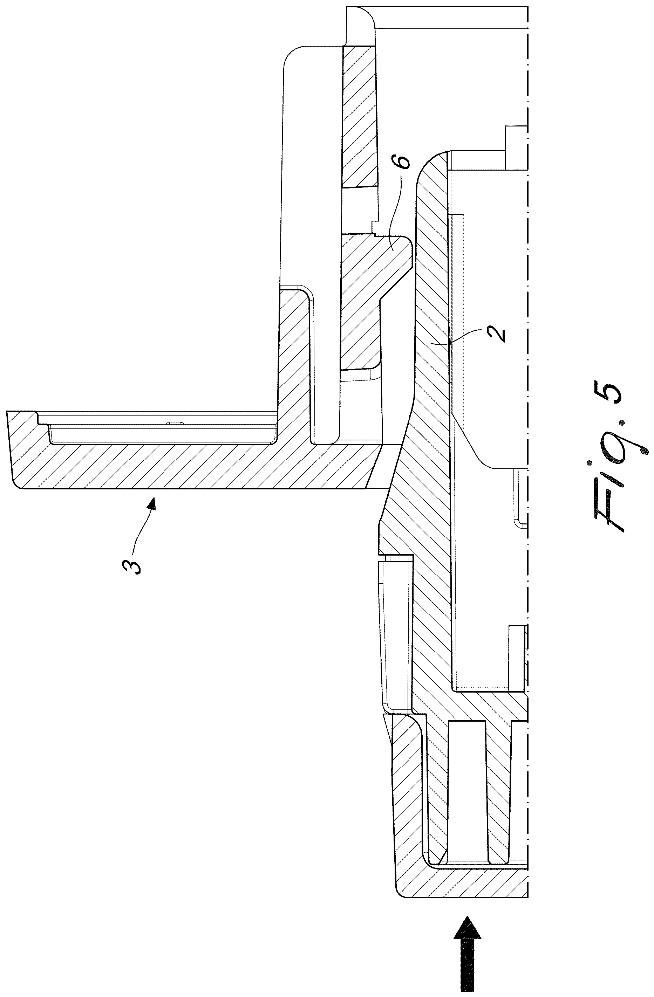

Figure 5 is a cross-sectional view, according to the V-V cross-sectional plane of figure 4, illustrating the two coupler devices in the initial phase of insertion of the module into the support;
Figure 6 is a similar view to the previous one illustrating the pre-hooking position;
Figure 7 is an enlarged view of the previous one illustrating the pre-hooking position;
Figure 8 is a cross-sectional view, according to the V-V sectional plane of figure 4, illustrating the coupling position;
Figure 9 is a cross-sectional view, according to sectional plane IX-IX of figure 4, illustrating the coupling position;

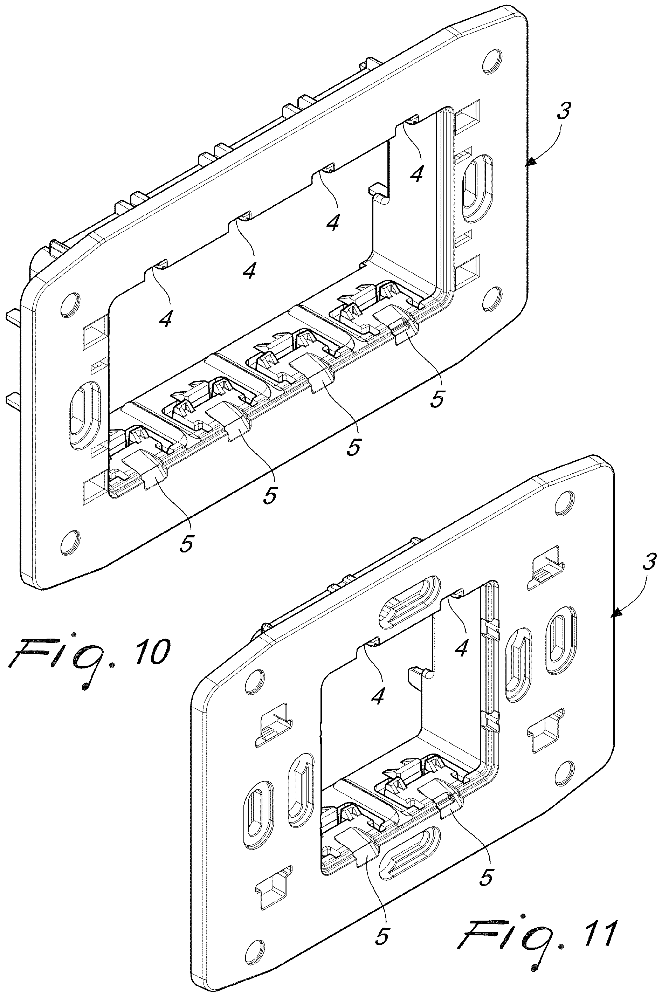

Figure 10 is a perspective view of a support for four modules;
Figure 11 is a perspective view of a support for two modules;

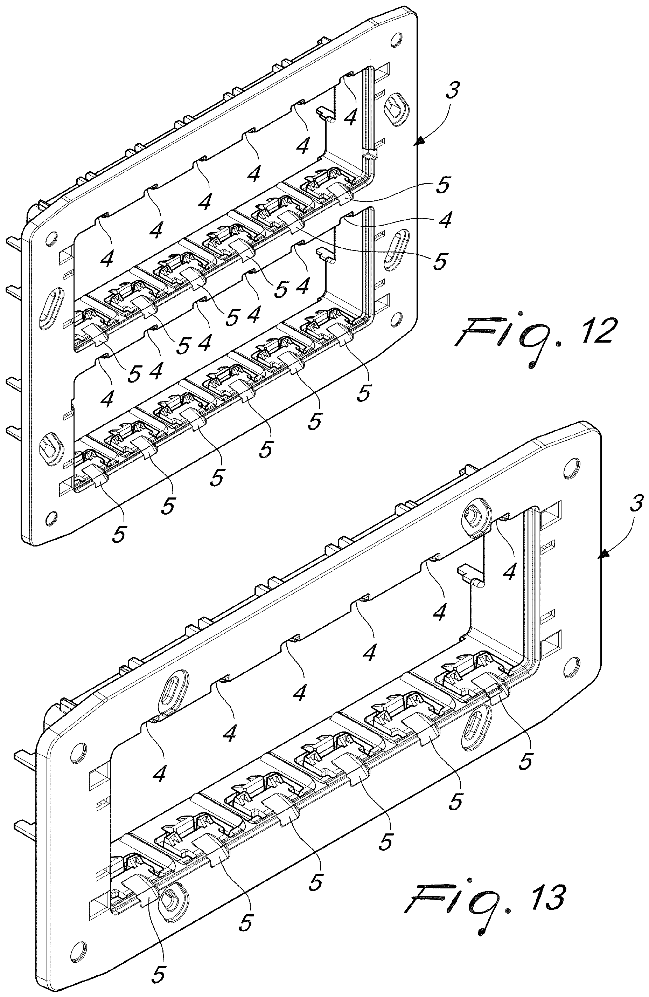

Figures 12 and 13 are perspective views of various supports for different numbers of modules.

With reference to the figures, the electric apparatus according to the invention, globally designated by reference number 1, comprises at least one module 2 which can be associated with a support 3 by means of at least one coupler device, in this case an upper coupler device 4 and a lower coupler device 5.

In the illustrated example, the module 2 comprises a switch, but more generally it could comprise any electrical module, such as a socket, pushbutton, etc.

Each coupler device comprises two independent hook systems, respectively an outer hook system comprising a pair of outer hooks 6 and an inner hook system comprising an inner hook 7.

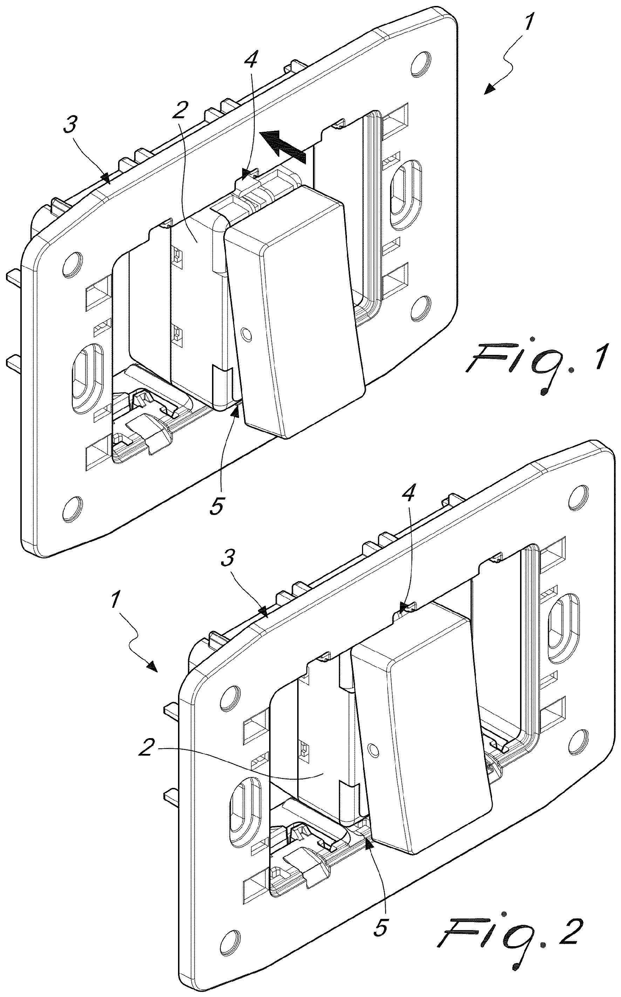

The two outer hooks 6 operate simultaneously and allow for a pre-coupling position of the modular device, visible in figure 1, where it is still possible to extract it from the support without tools.

Then, by continuing the insertion, the final coupling is achieved by means of the inner hook 7, visible in figure 2.

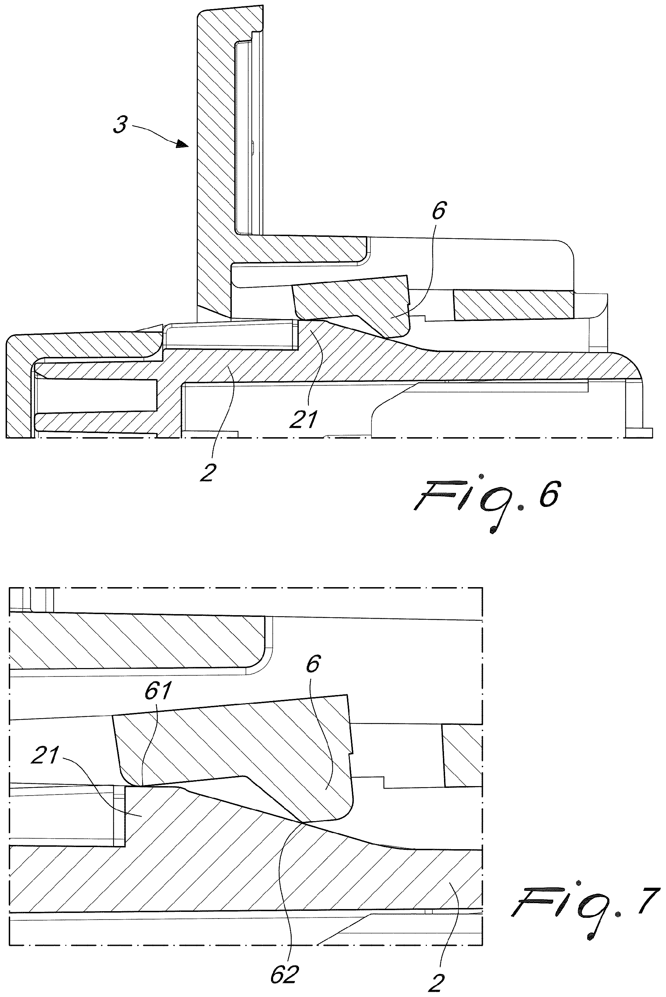

More in detail, when inserting the module 2 into the support, the module reaches the pre-coupling position, visible in figures 6 and 7, in which the action of inserting the module into the support bends the external hook 6 which, thanks to the particular geometry, creates two contact points, indicated by the reference numbers 61 and 62, with the module 2, determining a stable pre-coupling position.

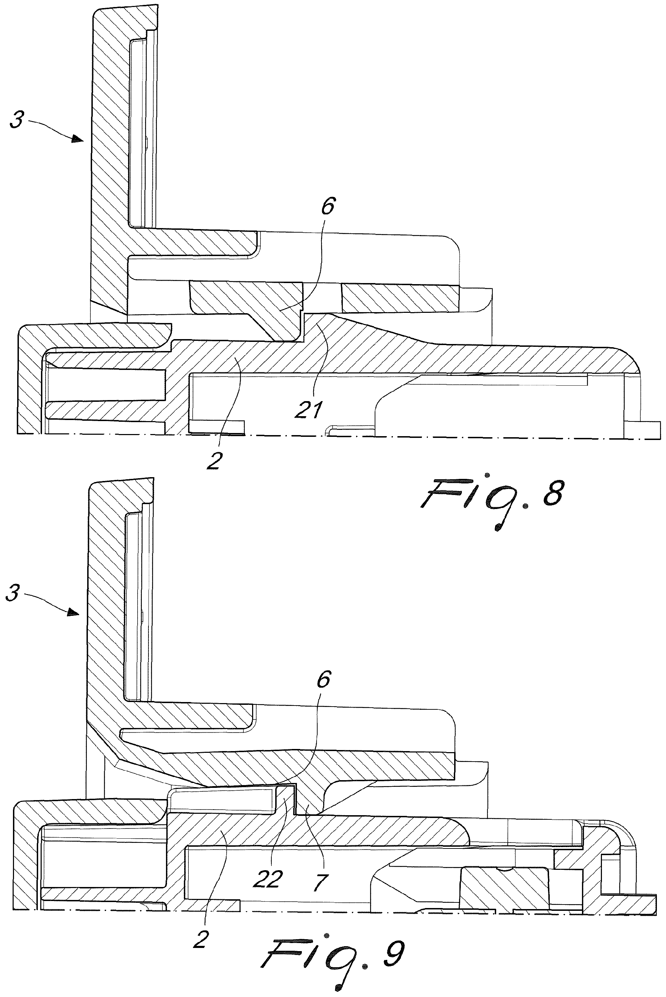

Subsequently, when desired, module 2 is further pushed into support 3 until the module finishes its stroke, reaching the final coupling position, visible in figures 8 and 9.

The final coupling position is made stable by the contrasting action of the outer hook 6 against a lateral edge 21 of the module 2, and by the reverse action of the inner hook 7 against a central edge 22 of the module 2.

The pre-coupling position allows the modular device to be held in the support while wiring or other checks are still in progress, and allows the final coupling to be carried out only once at the end of all operations, thus saving time.

In practice, it has been found that the invention achieves the intended aim and objects providing a coupler system of an electrical module to a support bracket which allows the module to be pre-coupled to the support bracket in a position which facilitates wiring and other necessary operations prior to final fastening.

The pre-coupling position facilitates wiring operations and, above all, saves time, which is particularly advantageous in installations requiring the wiring of numerous modules.

## Claims

1. An electric apparatus comprising at least one module (2) to be associated to a support (3) by means of at least one coupler device (4, 5); said apparatus being **characterized in that** said coupler device (4, 5) comprises two independent hook systems, respectively an outer hook system (6) and an inner hook system (7); said outer hook system (6) being configured to define a pre-coupling position of said module (2) with respect to said support (3), wherein said module (2) is wired; said inner hook system (7) effecting a final fastening of said module (2) to said support (3) in an operational position.

2. The electric apparatus according to claim 1, **characterized in that** said outer hook system comprises a pair of outer hooks (6).

3. The electric apparatus according to claim 1 or 2, **characterized in that** said inner hook system comprises an inner hook (7).

4. The electric apparatus according to one or more of the preceding claims, **characterized in that** said outer hooks (6) operate simultaneously and determine a pre-coupling position of said module.

5. The electric apparatus, according to one or more of the preceding claims, **characterized in that**, in said pre-coupling position, said module (2) can be extracted from said support (3) without tools.

6. The electric apparatus, according to one or more of the preceding claims, **characterized in that** said pre-coupling position is defined by a bend of said outer hook (6) forming two contact points (61, 62) between said outer hook (6) and a surface of said module (2).

7. The electric apparatus, according to one or more of the preceding claims, **characterized in that** said final fastening of said module (2) to said support (3) is formed by a final coupling position made stable by a contrasting action of said outer hook (6) with respect to a lateral edge (21) of said module (2), and by a reverse action of said inner hook (7) with respect to a central edge (22) of said module (2).

8. The electric apparatus according to one or more of the preceding claims, **characterized in that** it comprises an upper coupler device (4) and a lower coupler device (5).
